# EUROPÄISCHE PATENTANMELDUNG

(11) **EP 2 755 134 A1**
(43) Veröffentlichungstag der Anmeldung: **16.07.2014**
(21) Anmeldenummer: 13151182.6
(22) Anmeldetag: 14.01.2013
(51) Int. Cl.: G06F 9/50, G05B 19/418, B21B 37/74, G05B 13/04

(54) **Steuerung einer technischen Anlage mit CPU und GPU**

(71) Anmelder: Siemens Aktiengesellschaft, 80333 München (DE); Friedrich-Alexander-Universität Erlangen-Nürnberg, 91054 Erlangen (DE)
(72) Erfinder: Dagner, Johannes, 91052 Erlangen (DE); Stürmer, Markus, 91054 Erlangen (DE); Köstler, Harald, 91074 Herzogenaurach (DE)

(57) **Zusammenfassung**

Eine erste als general purpose-Rechner ausgebildete Recheneinrichtung (4) nimmt zu einem Anfangszeitpunkt (T1) von einer Basisautomatisierung (2) einer technischen Anlage (1) Prozessgrößen (P) entgegen. Die erste Recheneinrichtung (4) führt eine Vorverarbeitung der ihr zugeführten Prozessgrößen (P) durch und führt die vorverarbeiteten Prozessgrößen (P') einer zweiten Recheneinrichtung (7) zu, die eine Vielzahl von floating point-Prozessoren (8) aufweist. Zumindest ein Teil der floating point-Prozessoren (8) ist aktiv. Diese ermitteln durch zumindest temporär parallele Abarbeitung einer jeweiligen Rechenaufgabe, ausgehend von einem Anfangsergebnis (AE), ein Gesamtergebnis (GE). Die Anzahl an ausgeführten Rechenaufgaben ist kleiner als die Anzahl an aktiven floating point-Prozessoren (8). Die floating point-Prozessoren (8) berücksichtigen die vorverarbeiteten Prozessgrößen (P') bei der Ermittlung des Gesamtergebnisses (GE) als Startbedingungen, als Randbedingungen und/oder im Rahmen eines Optimierungsproblems. Die zweite Recheneinrichtung (7) ermittelt anhand des Gesamtergebnisses (GE) ein Zwischenergebnis (ZE), das sie an die erste Recheneinrichtung (4) zurück übermittelt. Die erste Recheneinrichtung (4) ermittelt unter Berücksichtigung des Zwischenergebnisses (ZE) Steuergrößen (S) für die technische Anlage (1) und gibt sie zu einem Endzeitpunkt (T2) an die Basisautomatisierung (2) aus. Die Differenz (δT) zwischen dem Endzeitpunkt (T2) und dem Anfangszeitpunkt (T1) ist kleiner als eine vorbestimmte Zeitschranke (ΔT).

## Beschreibung

Die vorliegende Erfindung betrifft ein Steuerverfahren für eine technische Anlage,
- wobei eine erste Recheneinrichtung zu einem Anfangszeitpunkt von einer Basisautomatisierung der technischen Anlage Prozessgrößen entgegennimmt,
- wobei die erste Recheneinrichtung als general purpose-Rechner ausgebildet ist,
- wobei die erste Recheneinrichtung die ihr zugeführten Prozessgrößen vorverarbeitet,
- wobei die erste Recheneinrichtung unter Berücksichtigung eines Zwischenergebnisses Steuergrößen für die technische Anlage ermittelt und die Steuergrößen zu einem Endzeitpunkt an die Basisautomatisierung der technischen Anlage ausgibt,
- wobei die Differenz zwischen dem Endzeitpunkt und dem Anfangszeitpunkt kleiner als eine vorbestimmte Zeitschranke ist.

Die vorliegende Erfindung betrifft weiterhin ein Computerprogramm, das von einer Steuereinrichtung für eine technische Anlage unmittelbar abarbeitbaren Maschinencode umfasst, wobei die Abarbeitung des Maschinencodes durch die Steuereinrichtung bewirkt, dass die Steuereinrichtung ein derartiges Steuerverfahren ausführt.

Die vorliegende Erfindung betrifft weiterhin eine Steuereinrichtung für eine technische Anlage,
- wobei die Steuereinrichtung eine erste Recheneinrichtung und eine zweite Recheneinrichtung umfasst,
- wobei die erste Recheneinrichtung als general purpose-Rechner ausgebildet ist,
- wobei die zweite Recheneinrichtung eine Mehrzahl parallel arbeitender floating point-Prozessoren aufweist und
- wobei die Steuereinrichtung mit einem derartigen Computerprogramm programmiert ist, so dass sie im Betrieb ein derartiges Steuerverfahren ausführt.

Die vorliegende Erfindung betrifft weiterhin eine technische Anlage, die eine derartige Steuereinrichtung aufweist.

Bei der Steuerung technischer Anlagen werden im Stand der Technik oftmals modellbasierte Prozessleitsysteme eingesetzt. Beispiele von technischen Anlagen, bei denen derartige modellbasierte Prozessleitsysteme eingesetzt werden, sind insbesondere großtechnische Anlagen, beispielsweise Anlagen der Grundstoffindustrie. Anlagen der Grundstoffindustrie können beispielsweise als Stranggießanlage, als Walzwerk oder als einer Walzstraße nachgeordnete Kühlstrecke ausgebildet sein. Auch andere Anlagen können mittels modellbasierter Prozessleitsysteme gesteuert werden, beispielsweise Anlagen der Chemieindustrie oder der Papiererzeugung. Rein beispielhaft seien als konkrete Anwendungen auf dem Gebiet von Anlagen der Stahlerzeugung und Stahlverarbeitung die Sollwertberechnung für den Bandkopf einer Warmbreitbandstraße, die Sumpfspitzenbestimmung bei einer Stranggießanlage und die Regelung der einer Fertigstraße nachgeordneten Kühlstrecke genannt.

Die innerhalb von modellbasierten Prozessleitsystemen verwendeten Modelle müssen echtzeitfähig sein. In der Praxis werden daher oftmals stark vereinfachte Modelle verwendet. Derartige vereinfachte Modelle modellieren die Realität jedoch nur in begrenztem Umfang. Bestimmte Situationen, die sich durch ausgeprägte zwei- oder dreidimensionale Effekte auszeichnen, sind mit derartigen Modellen nicht oder nur in Verbindung mit manuellen Eingriffen einer Bedienperson beherrschbar. Rein beispielhaft sei in diesem Zusammenhang auf die Problematik eines in einem gewalzten Band auftretenden Dickenkeils und die damit gekoppelte sogenannte Säbelbildung verwiesen.

Aus den oben stehenden Ausführungen ist ersichtlich, dass die Implementierung komplexer echtzeitfähiger Modelle in die entsprechenden Prozessleitsysteme erhebliche Vorteile bietet. Aufgrund der begrenzten Rechenkapazität von general purpose-Rechnern erfolgt eine derartige Implementierung im Stand der Technik jedoch nicht. Im Stand der Technik erfolgt vielmehr meist eine manuelle oder manuell unterstützte Steuerung des Prozesses. Alternativ ist im Stand der Technik bekannt, ein komplexes, nicht echtzeitfähiges Modell auf einem nicht zur Steuerung der technischen Anlage verwendeten Rechner zu implementieren, für eine Vielzahl von möglichen Prozessgrößen das jeweilige Zwischenergebnis zu ermitteln und die Zwischenergebnisse in einer Lookup-Table zu hinterlegen. Die vorab erstellte Lookup-Table wird in diesem Fall im Rahmen des Prozessleitsystems zur Ermittlung des jeweiligen Zwischenergebnisses verwendet.

Im Stand der Technik sind weiterhin Recheneinrichtungen bekannt, die eine Mehrzahl parallel arbeitender floating point-Prozessoren aufweisen. Die Anzahl an floating point-Prozessoren liegt in der Regel bei mehreren Dutzend, in manchen Fällen sogar bei mehreren 100. Derartige Recheneinrichtungen erreichen ein Vielfaches der floating point-Rechenleistung eines general purpose-Rechners. Beispielsweise sind übliche Grafikkarten moderner PCs derart ausgebildet. Der Begriff "Grafikkarte" und auch der Begriff "GPU" (graphics processing unit) werden daher nachfolgend als Synonyme für eine Recheneinrichtung verwendet, die eine Vielzahl parallel arbeitender floating point-Prozessoren aufweist. Es sind auch andere Arten derartiger Recheneinrichtungen bekannt, beispielsweise sogenannte FPGAs (field programmable gate arrays).

Die Parallelität der floating point-Prozessoren und die hohe floating point-Rechenleistung führen zu einer verringerten Flexibilität bei der Abarbeitung von Algorithmen. Insbesondere wenn Algorithmen mit Verzweigungen und/oder Sprungbefehlen ausgeführt werden sollen, sinkt die tatsächlich erreichte Rechenleistung drastisch. Ein weiterer Nachteil derartiger Recheneinrichtungen besteht darin, dass die Datenübertragung zur Grafikkarte und zurück mit einer erheblich niedrigeren Datenrate erfolgt als der Zugriff eines general purpose-Rechners auf seinen Hauptspeicher. Auch weisen moderne general purpose-Rechner üblicherweise schnelle Caches auf, die vor allem bei komplexen Algorithmen zu einer erheblich beschleunigten Abarbeitung führen.

Im Rahmen der Steuerung einer technischen Anlage müssen in aller Regel Algorithmen abgearbeitet werden, die Verzweigungen und/oder Sprungbefehle aufweisen. Wenn in einem derartigen Fall - dem Standardfall - ein komplexes echtzeitfähiges Modell in die entsprechende Steuereinrichtung integriert werden soll, müssen sowohl eine extrem hohe floating point-Rechenleistung als auch die Möglichkeit zur Ausführung von Verzweigungen und Sprüngen zur Verfügung gestellt werden.

Aus der WO 2011/023203 A1 ist bekannt, eine Grafikkarte zur Steuerung eines Automatisierungssystems einzusetzen. Bei der WO 2011/023203 A1 wird die Automatisierungsaufgabe in eine Anzahl parallel auszuführender Teilaufgaben zerlegt, wobei jede Teilaufgabe von einem eigenen Prozessor der Grafikkarte abgearbeitet wird. Ferner ist in der WO 2011/023203 A1 die kombinierte Nutzung einer Vielkern-CPU zusammen mit einer Grafikkarte erwähnt.

Die Aufgabe der vorliegenden Erfindung besteht darin, Möglichkeiten zu schaffen, ein komplexes echtzeitfähiges Modell in eine Steuereinrichtung zu integrieren, wobei dennoch die Möglichkeit, Verzweigungen und/oder Sprungbefehle auszuführen, erhalten bleiben soll.

Die Aufgabe wird durch ein Steuerverfahren mit den Merkmalen des Anspruchs 1 gelöst. Vorteilhafte Ausgestaltungen der erfindungsgemäßen Steuerverfahrens sind Gegenstand der abhängigen Ansprüche 2 bis 11.

Erfindungsgemäß wird ein Steuerverfahren der eingangs beschriebenen Art dadurch weitergebildet,
- dass die erste Recheneinrichtung die vorverarbeiteten Prozessgrößen einer zweiten Recheneinrichtung zuführt,
- dass die zweite Recheneinrichtung eine Vielzahl von floating point-Prozessoren aufweist,
- dass zumindest ein Teil der floating point-Prozessoren aktiv ist,
- dass die aktiven floating point-Prozessoren durch zumindest temporär parallele Abarbeitung einer jeweiligen Rechenaufgabe, ausgehend von einem Anfangsergebnis, ein Gesamtergebnis ermitteln,
- dass die Anzahl an ausgeführten Rechenaufgaben kleiner als die Anzahl an aktiven floating point-Prozessoren ist,
- dass die floating point-Prozessoren die vorverarbeiteten Prozessgrößen bei der Ermittlung des Gesamtergebnisses als Startbedingungen, als Randbedingungen und/oder im Rahmen eines Optimierungsproblems berücksichtigen,
- dass die zweite Recheneinrichtung anhand des Gesamtergebnisses das Zwischenergebnis ermittelt und
- dass die zweite Recheneinrichtung das Zwischenergebnis an die erste Recheneinrichtung zurück übermittelt.

Im Rahmen der vorliegenden Erfindung erfolgt also eine vorteilhafte Aufteilung der im einzelnen auszuführenden Aufgaben auf die erste und die zweite Recheneinrichtung. Insbesondere werden das Entgegennehmen der Prozessgrößen von der Basisautomatisierung und das Ausgeben der Steuergrößen an die Basisautomatisierung von der ersten Recheneinrichtung ausgeführt, während die Modellierung des dem Betrieb der technischen Anlage zu Grunde liegenden technischen Prozesses mittels der zweiten Recheneinrichtung erfolgt. Die zweite Recheneinrichtung kann ihrerseits mehrere Untereinheiten aufweisen, wobei jede Untereinheit mehrere floating point-Prozessoren aufweist.

Die Vorverarbeitung der Prozessgrößen durch die erste Recheneinrichtung kann nach Bedarf ausgestaltet sein. Insbesondere ist es möglich, dass die erste Recheneinrichtung die vorverarbeiteten Prozessgrößen durch auf den entgegengenommenen Prozessgrößen basierende, aufeinander aufbauende Rechenoperationen und/oder von den entgegengenommenen Prozessgrößen abhängige konditionale Rechenoperationen und/oder durch Akkumulation, Filterung und/oder statistische Auswertung der entgegengenommenen Prozessgrößen ermittelt. Die erste Zykluszeit ist daher vorzugsweise relativ klein. Beispielsweise kann sie zwischen ca. 20 ms und ca. 500 ms liegen, insbesondere bei ca. 250 ms.

Es ist möglich, dass das erfindungsgemäße Steuerverfahren nur von Zeit zu Zeit ausgeführt wird, beispielsweise aufgrund einer Anforderung durch einen Benutzer. In der Regel wird das Steuerverfahren jedoch wiederholt ausgeführt. In diesem Fall ist es möglich, dass die erste Recheneinrichtung die zweite Recheneinrichtung zu Beginn der erneuten Ausführung neu initialisiert. Der Umfang von an die zweite Recheneinrichtung zu übertragenden Daten und/oder der zum Ermitteln des Gesamtergebnisses erforderliche Zeitaufwand können jedoch - in vielen Fällen deutlich, in manchen Fällen sogar extrem - dadurch reduziert werden, dass die zweite Recheneinrichtung das von ihr ermittelte Gesamtergebnis speichert und im Rahmen des nachfolgenden Aufrufs im Rahmen des Anfangsergebnisses berücksichtigt. Beispielsweise kann die zweite Recheneinrichtung das gespeicherte Gesamtergebnis als Anfangsergebnis für den nachfolgenden Aufruf verwenden. Im Falle der Übermittlung einer zeitlichen Sequenz an die zweite Recheneinrichtung kann beispielsweise die Datenübermittlung auf die neu hinzugekommenen vorverarbeiteten Prozessgrößen beschränkt werden.

Das erfindungsgemäße Steuerverfahren ist besonders effizient, wenn alle aktiven floating point-Prozessoren dieselbe Rechenaufgabe ausführen.

In vielen Fällen führen die aktiven floating point-Prozessoren die Rechenaufgabe für ein mindestens zweidimensionales Feld von Zellen aus. Die Anzahl an Zellen ist oftmals erheblich größer als die Anzahl an floating point-Prozessoren. In diesem Fall ordnet die zweite Recheneinrichtung jedem aktiven floating point-Prozessor eine Anzahl von Zellen zu, für welche der jeweilige aktive floating point-Prozessor die Rechenaufgabe ausführt. Weiterhin sind in diesem Fall vorzugsweise alle floating point-Prozessoren aktiv.

Ein besonders effizienter Betrieb der floating point-Prozessoren ergibt sich dadurch, dass die aktiven floating point-Prozessoren das Gesamtergebnis dadurch ermitteln, dass sie für die jeweilige Zelle nach und nach in einer Anzahl von Schritten jeweils aufbauend auf dem Ergebnis des vorherigen Schrittes das Ergebnis des jeweiligen Schrittes ermitteln. Das Gesamtergebnis entspricht in diesem Fall dem Ergebnis des letzten Schrittes.

Die Schritte können mit einer zeitlichen Entwicklung korrespondieren. In diesem Fall korrespondiert die Entwicklung von Schritt zu Schritt oftmals mit einer relativ kleinen Zeitspanne, beispielsweise ca. 10 ms bis 100 ms. Dies ist insbesondere dann von Vorteil, wenn die numerische Stabilität der einheitlichen Rechenaufgabe kleine Zeitschritte erfordert.

In einer besonders vorteilhaften Ausgestaltung des erfindungsgemäßen Steuerverfahrens berücksichtigen die aktiven floating point-Prozessoren im Rahmen der Ermittlung des Ergebnisses des jeweiligen Schrittes jeweils nur das Ergebnis des unmittelbar vorhergehenden Schrittes der jeweiligen Zelle und der an die jeweilige Zelle angrenzenden Zellen. Diese Vorgehensweise ist insbesondere beim Lösen von Differenzialgleichungssystemen von Vorteil, die ortsabhängig, zeitabhängig oder sowohl orts- als auch zeitabhängig sind.

Die Rechenaufgabe umfasst für die Schritte zum Ermitteln des Ergebnisses des jeweiligen Schrittes eine jeweilige Teilrechenaufgabe. Vorzugsweise ist die Teilrechenaufgabe für alle Schritte einheitlich dieselbe.

Es kann im Einzelfall geschehen, dass die zweite Recheneinrichtung - beispielsweise aufgrund sich ungünstig ergebender Anfangs- und/oder Randbedingungen - das Zwischenergebnis nicht innerhalb der vorbestimmten Zeitschranke - diese gerechnet ab dem Anfangszeitpunkt - an die erste Recheneinrichtung zurück übermittelt. Um dennoch auch in einem derartigen Fall einen ordnungsgemäßen (wenn auch suboptimalen) Betrieb der technischen Anlage gewährleisten zu können, ermittelt die erste Recheneinrichtung in diesem Fall vorzugsweise in Abhängigkeit von den ihr vorliegenden vorverarbeiteten Prozessgrößen Notsteuergrößen für die technische Anlage und gibt die Notsteuergrößen an die Basisautomatisierung der technischen Anlage aus. In dem Fall, dass die erste Recheneinrichtung von der zweiten Rechnereinrichtung bei einem früheren Aufruf bereits ein Zwischenergebnis entgegengenommen hat, kann die erste Recheneinrichtung dieses Zwischenergebnis bei der Ermittlung der Notsteuergrößen berücksichtigen. Vorzugsweise ermittelt die erste Recheneinrichtung die Notsteuergrößen bereits vor Ablauf der vorbestimmten Zeitschranke. Diese Vorgehensweise bietet den Vorteil, dass die Notsteuergrößen gegebenenfalls sofort zur Verfügung stehen.

Die Aufgabe wird weiterhin durch ein Computerprogramm mit den Merkmalen des Anspruchs 12 gelöst. Erfindungsgemäß bewirkt die Abarbeitung des Maschinencodes durch die Steuereinrichtung, dass die Steuereinrichtung ein erfindungsgemäßes Steuerverfahren ausführt.

Die Aufgabe wird weiterhin durch eine Steuereinrichtung mit den Merkmalen des Anspruchs 13 gelöst. Erfindungsgemäß ist vorgesehen, dass die Steuereinrichtung mit einem erfindungsgemäßen Computerprogramm programmiert ist, so dass sie im Betrieb ein erfindungsgemäßes Steuerverfahren ausführt.

Die Aufgabe wird weiterhin gemäß Anspruch 14 durch eine technische Anlage gelöst, die eine erfindungsgemäße Steuereinrichtung aufweist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine technische Anlage mit Steuerung,
- FIG 2: ein Ablaufdiagramm,
- FIG 3: ein Zeitdiagramm,
- FIG 4 bis 8: Ablaufdiagramme,
- FIG 9: ein Feld von Zellen und
- FIG 10 bis 12: Ablaufdiagramme.

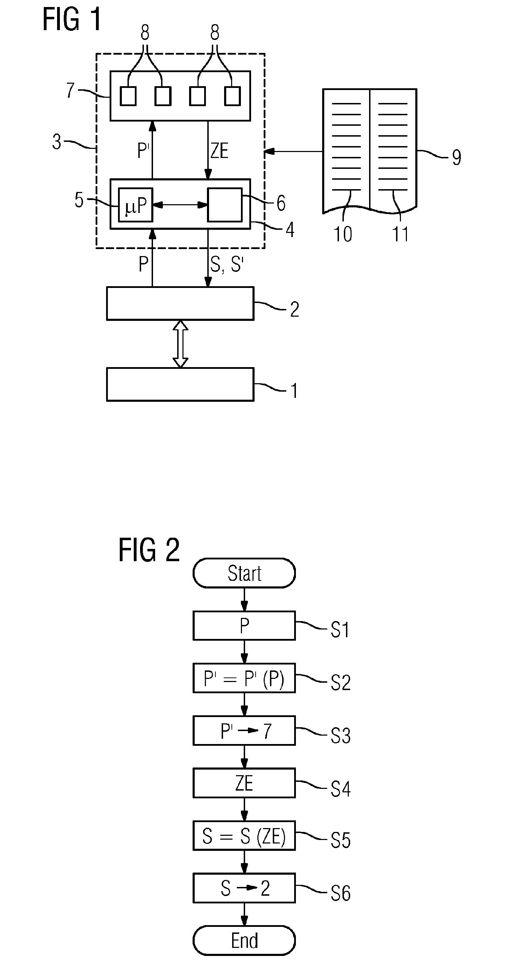

Gemäß FIG 1 wird eine technische Anlage 1 von einer Basisautomatisierung 2 gesteuert. Die technische Anlage 1 kann beispielsweise als Anlage der Grundstoffindustrie ausgebildet sein, beispielsweise als Stranggießanlage, als Walzwerk oder als Kühlstrecke. Auch andere Ausgestaltungen sind möglich. Die Basisautomatisierung ist oftmals als sogenannte level 1-Automatisierung ausgebildet. Die Basisautomatisierung 2 erfasst Prozessgrößen P der technischen Anlage 1. Beispielsweise können als Prozessgrößen P Temperaturen eines gegossenen oder gewalzten Bandes entgegengenommen werden.

Der Basisautomatisierung 2 ist eine Steuereinrichtung 3 übergeordnet. Die Steuereinrichtung 3 ist oftmals als sogenannte level 2-Automatisierung ausgebildet. Die Steuereinrichtung 3 umfasst eine erste Recheneinrichtung 4. Die erste Recheneinrichtung 4 ist als general purpose-Rechner ausgebildet. Sie umfasst insbesondere einen Mikroprozessor 5 und einen Hauptspeicher 6. Der Mikroprozessor 5 umfasst seinerseits in der Regel einen Cache (nicht dargestellt). Die Steuereinrichtung 3 umfasst weiterhin eine zweite Recheneinrichtung 7. Die zweite Recheneinrichtung 7 umfasst eine Vielzahl von floating point-Prozessoren 8. In der Regel ist die Anzahl an floating point-Prozessoren 8 erheblich. Manchmal liegt sie oberhalb von 100. Die dargestellte Anzahl von (nur) vier floating point-Prozessoren 8 ist daher nur beispielhaft. Die zweite Recheneinrichtung 7 kann ihrerseits mehrere Untereinheiten aufweisen, wobei jede Untereinheit mehrere floating point-Prozessoren 8 aufweist.

Die Steuereinrichtung 3 ist mit einem Computerprogramm 9 programmiert. Das Computerprogramm 9 umfasst Maschinencode 10, 11, der von der Steuereinrichtung 3 unmittelbar abarbeitbar ist. Insbesondere ist der Maschinencode 10 von der ersten Recheneinrichtung 4 unmittelbar abarbeitbar, der Maschinencode 11 von der zweiten Recheneinrichtung 7. Die Abarbeitung des Maschinencodes 10, 11 durch die Steuereinrichtung 3 bewirkt, dass die Steuereinrichtung 3 ein Steuerverfahren ausführt, das nachfolgend in Verbindung mit den FIG 2, 3 und 4 näher erläutert wird.

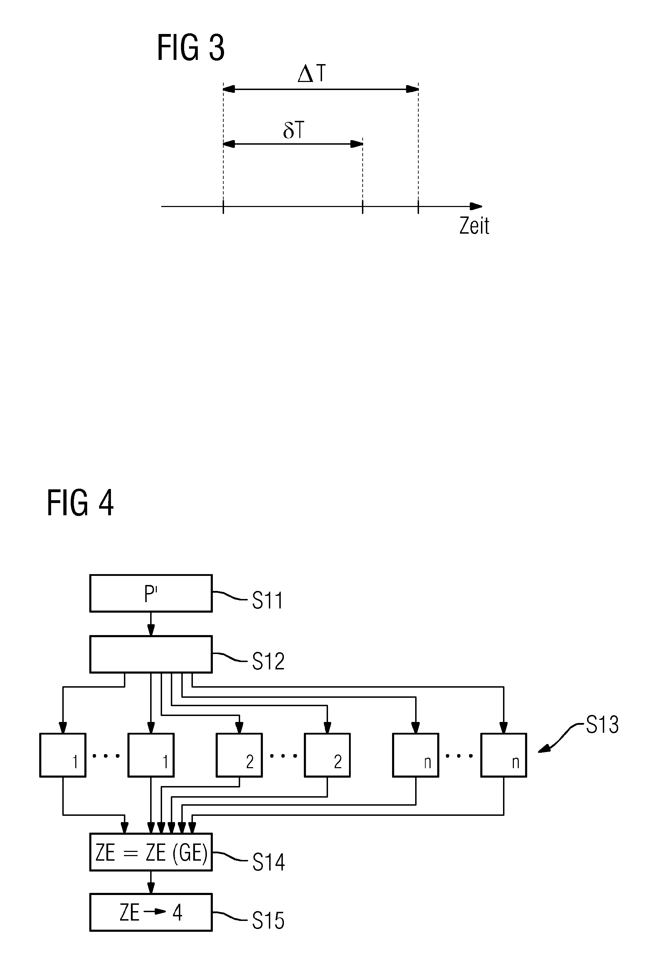

Gemäß FIG 2 nimmt die erste Recheneinrichtung 4 in einem Schritt S1 von der Basisautomatisierung 2 die Prozessgrößen P entgegen. Das Entgegennehmen erfolgt - siehe FIG 3 - zu einem Anfangszeitpunkt T1. In einem Schritt S2 führt die erste Recheneinrichtung 4 eine Vorverarbeitung der Prozessgrößen P durch. Die vorverarbeiteten Prozessgrößen sind zur Unterscheidung von den nicht vorverarbeiteten Prozessgrößen P mit dem Bezugszeichen P' versehen. Auf mögliche Arten der Vorverarbeitung wird später näher eingegangen werden. Sodann führt die erste Recheneinrichtung 4 die vorverarbeiteten Prozessgrößen P' in einem Schritt S3 der zweiten Recheneinrichtung 7 zu.

In einem Schritt S4 nimmt die erste Recheneinrichtung 4 von der zweiten Recheneinrichtung 7 ein Zwischenergebnis ZE entgegen. In einem Schritt S5 ermittelt die erste Recheneinrichtung 4 unter Berücksichtigung des Zwischenergebnisses ZE Steuergrößen S für die technische Anlage 1. Die erste Recheneinrichtung 4 gibt die ermittelten Steuergrößen S in einem Schritt S6 zu einem Endzeitpunkt T2 (siehe FIG 3) an die Basisautomatisierung 2 der technischen Anlage 1 aus. Die Differenz δT zwischen dem Endzeitpunkt T2 und dem Anfangszeitpunkt T1 ist kleiner als eine vorbestimmte Zeitschranke ΔT.

Die zweite Recheneinrichtung 7 arbeitet Hand in Hand mit der ersten Recheneinrichtung 4. Die zweite Recheneinrichtung 7 nimmt daher gemäß FIG 4 in einem Schritt S11 die ihr von der ersten Recheneinrichtung 4 übermittelten vorverarbeiteten Prozessgrößen P' entgegen. In einem Schritt S12 verteilt die zweite Recheneinrichtung 7 die entgegengenommenen Prozessgrößen P' auf alle oder zumindest einen Teil ihrer floating point-Prozessoren 8. Diese floating point-Prozessoren 8 werden nachstehend als aktive floating point-Prozessoren 8 bezeichnet. In einem Schritt S13 ermitteln die aktiven floating point-Prozessoren 8 durch Abarbeitung einer jeweiligen Rechenaufgabe ein Gesamtergebnis GE. Die aktiven floating point-Prozessoren 8 beginnen hierbei die Ermittlung des Gesamtergebnisses GE ausgehend von einem Anfangsergebnis AE. Der Schritt S13 ist in FIG 4 mehrfach nebeneinander eingezeichnet, um darzustellen, dass die aktiven floating point-Prozessoren 8 zur Ermittlung des Gesamtergebnisses GE zumindest temporär parallel arbeiten.

Aus FIG 4 ist weiterhin ersichtlich, dass die aktiven floating point-Prozessoren 8 zumindest teilweise einheitliche Aufgaben ausführen. Die Anzahl an ausgeführten Rechenaufgaben ist also kleiner als die Anzahl an aktiven floating point-Prozessoren 8. In der Regel ist die Anzahl an ausgeführten Rechenaufgaben kleiner als 10, während die Anzahl an aktiven floating point-Prozessoren 8 oftmals bei 100 und mehr liegt.

Es ist möglich, dass die floating point-Prozessoren 8 die vorverarbeiteten Prozessgrößen P' bei der Ermittlung des Gesamtergebnisses GE als Startbedingungen berücksichtigen. In diesem Fall sind die vorverarbeiteten Prozessgrößen P' Bestandteil des Anfangsergebnisses AE. Beispielsweise kann eine Verwendung als Startbedingungen sinnvoll sein, wenn die vorverarbeiteten Prozessgrößen P' tatsächliche Temperaturen von Bandpunkten eines Metallbandes vor einer Walzstraße und/oder einer Kühlstrecke repräsentieren und die Temperaturentwicklung während des Durchlaufs der Bandpunkte durch die Walzstraße und/oder die Kühlstrecke modelliert werden soll. Alternativ oder zusätzlich ist es möglich, dass die floating point-Prozessoren 8 die vorverarbeiteten Prozessgrößen P' bei der Ermittlung des Gesamtergebnisses GE als Randbedingungen berücksichtigen. Eine Berücksichtigung als Randbedingungen kann beispielsweise sinnvoll sein, wenn die vorverarbeiteten Prozessgrößen P' Kühlmittelmengen repräsentieren, mit denen die Bandpunkte während des Durchlaufs der Bandpunkte durch die Walzstraße und/oder die Kühlstrecke beaufschlagt werden.

Alternativ oder zusätzlich ist es möglich, dass die floating point-Prozessoren 8 die vorverarbeiteten Prozessgrößen P' im Rahmen eines Optimierungsproblems berücksichtigen. Eine derartige Berücksichtigung kann beispielsweise sinnvoll sein, wenn die Prozessgrößen P' aus technologischen Gründen angestrebte Zielgrößen umfassen und mittels der zweiten Recheneinrichtung 7 Ansteuerwerte für Stelleinrichtungen der technischen Anlage 1 ermittelt werden sollen.

In einem Schritt S14 ermittelt die zweite Recheneinrichtung 7 anhand des Gesamtergebnisses GE das Zwischenergebnis ZE. In einem Schritt S15 übermittelt die zweite Recheneinrichtung 7 das Zwischenergebnis ZE an die erste Recheneinrichtung 4 zurück.

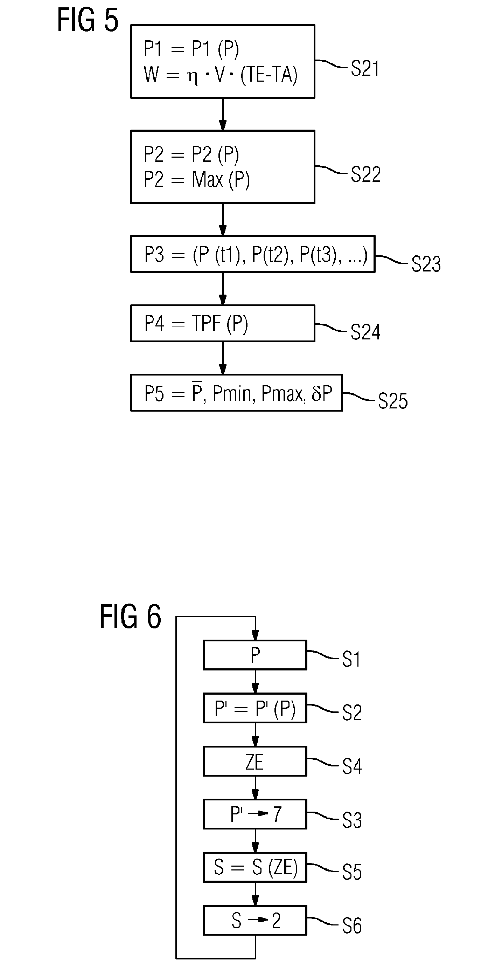

In Verbindung mit FIG 5 werden nachstehend mögliche Arten der Vorverarbeitung der Prozessgrößen P erläutert, also mögliche Ausgestaltungen des Schrittes S2 von FIG 2. Die möglichen Arten der Vorverarbeitung sind nicht abschließend. Es sind auch andere Arten der Vorverarbeitung möglich. Weiterhin sind in Verbindung mit FIG 5 verschiedene Arten der Vorverarbeitung kombiniert dargestellt, so dass nacheinander verschiedene vorverarbeitete Prozessgrößen P1, P2,... ermittelt werden. Die verschiedenen Arten der Vorverarbeitung sind jedoch auch einzeln realisierbar.

Gemäß FIG 5 ermittelt die erste Recheneinrichtung 4 in einem Schritt S21 durch auf den entgegengenommenen Prozessgrößen P aufbauende Rechenoperationen vorverarbeitete Prozessgrößen P1. Beispielsweise kann bei einer Stranggießkokille zunächst anhand der Temperatur eines zuströmenden und eines abströmenden Kühlmittels die entsprechende die Temperaturdifferenz und sodann anhand der ermittelten Temperaturdifferenz in Verbindung mit einer erfassten Kühlmittelmenge und einer Wärmekapazität des Kühlmittels ein Wärmemengenstrom ermittelt werden. In einem Schritt S22 ermittelt die erste Recheneinrichtung 4 vorverarbeitete Prozessgrößen P2 durch von den entgegengenommenen Prozessgrößen P abhängige konditionale Rechenoperationen. Beispielsweise können als vorverarbeitete Prozessgrößen P2 jeweils die Maximalwerte mehrerer Messungen herangezogen werden. Eine derartige Vorgehensweise kann beispielsweise bei Temperatursensoren einer Stranggießkokille sinnvoll sein, um mit Sicherheit einen Kokillendurchbruch zu vermeiden. In einem Schritt S23 ermittelt die erste Recheneinrichtung 4 vorverarbeitete Prozessgrößen P3 durch Akkumulation der entgegengenommenen Prozessgrößen P. Beispielsweise kann über einen gewissen Zeitraum hinweg wiederholt jeweils ein Messwert erfasst werden, beispielsweise jeweilige Temperatur eines Bandpunktes vor einer Fertigstraße und/oder einer Kühlstrecke. Die Gesamtheit der erfassten Temperaturen bildet in diesem Fall einen entsprechenden Vektor für mehrere Bandpunkte. In einem Schritt S24 ermittelt die erste Recheneinrichtung 4 vorverarbeitete Prozessgrößen P4 durch Filterung der entgegengenommenen Prozessgrößen P. Beispielsweise können eine gleitende Mittelwertbildung oder eine zeitliche Tiefpassfilterung erfolgen. In einem Schritt S25 ermittelt die erste Recheneinrichtung 4 vorverarbeitete Prozessgrößen P5 durch statistische Auswertung der entgegengenommenen Prozessgrößen P. Beispielsweise können Mittelwert, Minimum, Maximum, Varianz oder Standardabweichung und dergleichen ermittelt werden.

Es ist möglich, dass die Vorgehensweise der FIG 2 bis 4 nur von Zeit zu Zeit ausgeführt wird, wobei die Zeitspanne zwischen den einzelnen Ausführungen erheblich sein kann. Beispiele derartiger Berechnungen sind Setupberechnungen, die nur zu Beginn eines Arbeitsvorgangs der technischen Anlage durchgeführt werden, beispielsweise Stichplanberechnungen. Oftmals werden die Berechnungen jedoch wiederholt ausgeführt, insbesondere zyklisch. In diesem Fall wird gemäß FIG 6 üblicherweise die Vorgehensweise gemäß FIG 2 geringfügig modifiziert. Insbesondere erfolgt in diesem Fall üblicherweise eine verschachtelte Vorgehensweise. Der Begriff "verschachtelt" bedeutet in diesem Zusammenhang, dass die Schritte S1 bis S3 einerseits und S4 bis S6 andererseits sich nicht auf dieselbe Ausführung beziehen, sondern auf voneinander verschiedene Ausführungen, insbesondere auf unmittelbar aufeinanderfolgende Ausführungen. Mit anderen Worten: Die erste Recheneinrichtung 4 führt die Schritte S1 bis S3 für eine bestimmte Ausführung aus, beispielsweise die n-te Ausführung. Die Schritte S4 bis S6 hingegen beziehen sich auf eine frühere Ausführung, beispielsweise die (n-1)-te Ausführung. Vorzugsweise ist weiterhin die Reihenfolge der Schritte S3 und S4 vertauscht. FIG 6 zeigt die entsprechende Abfolge der Schritte. Weiterhin können der Schritt S1 einerseits und die Schritte S3 und S4 andererseits in Grenzen voneinander entkoppelt sein. Insbesondere wird der Schritt S1 oftmals mit einer relativ kurzen Zykluszeit wiederholt ausgeführt. Die Zykluszeit kann beispielsweise 50 ms bis 500 ms betragen, insbesondere 100 ms bis 300 ms. Beispielsweise kann sie bei 200 ms bis 250 ms liegen. Die Schritte S3 und S4 hingegen werden nur von Zeit zu Zeit ausgeführt, beispielsweise mit einer Zykluszeit, die zwischen 500 ms und 10 s liegt.

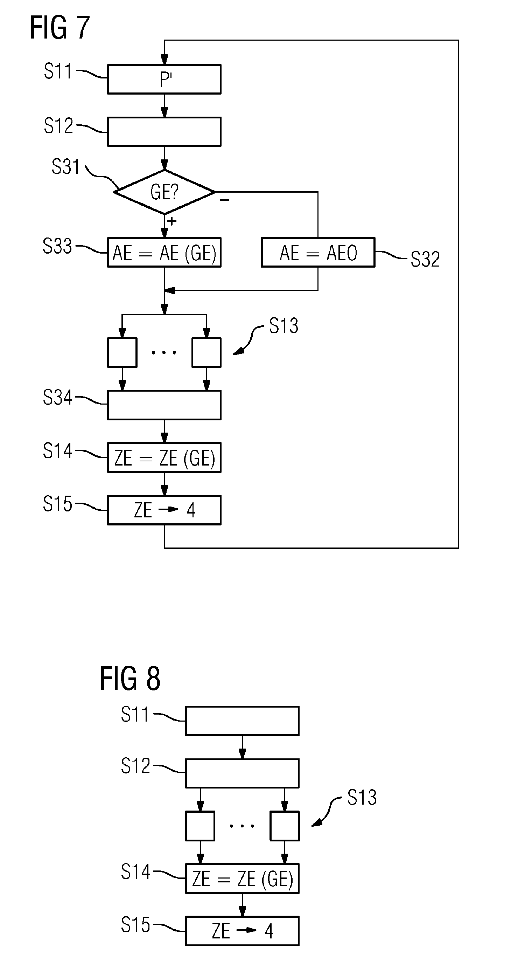

Der erstmaligen Übergabe der vorverarbeiteten Prozessgrößen P' von der ersten Recheneinrichtung 4 an die zweite Recheneinrichtung 7 ist der zweiten Recheneinrichtung 7 in der Regel keine weitere sinnvolle Information bekannt. Die zweite Recheneinrichtung 7 beginnt sozusagen bei Null an zu rechnen. Bei nachfolgenden Übergaben der vorverarbeiteten Prozessgrößen P' hat die zweite Recheneinrichtung 7 hingegen zuvor bereits ein Gesamtergebnis GE und auch ein Zwischenergebnis ZE ermittelt. Es ist möglich und in der Regel auch vorteilhaft, dass die zweite Recheneinrichtung 7 die obenstehend in Verbindung mit FIG 4 erläuterte Vorgehensweise gemäß FIG 7 dahingehend modifiziert, dass sie - zusätzlich zu den Schritten S11 bis S15 - Schritte S31 bis S34 ausführt.

Im Schritt S31 prüft die zweite Recheneinrichtung 7, ob ihr bereits ein Gesamtergebnis GE bekannt ist. Wenn dies nicht der Fall ist, setzt die zweite Recheneinrichtung 7 das Anfangsergebnis AE im Schritt S32 auf einen Initialwert AEO. Anderenfalls verwertet die zweite Recheneinrichtung 7 das ihr bekannte Gesamtergebnis GE im Rahmen des Anfangsergebnisses AE. Insbesondere kann die zweite Recheneinrichtung 7 in manchen Fällen das ihr bekannte Gesamtergebnis GE direkt als Anfangsergebnis AE übernehmen. Im Schritt S34 speichert die zweite Recheneinrichtung 7 das von ihr ermittelte Gesamtergebnis GE ab. Dadurch ist der zweiten Recheneinrichtung 7 das Gesamtergebnis GE beim erneuten Durchlauf durch die Schritte S11 bis S15 und S31 bis S34 bekannt.

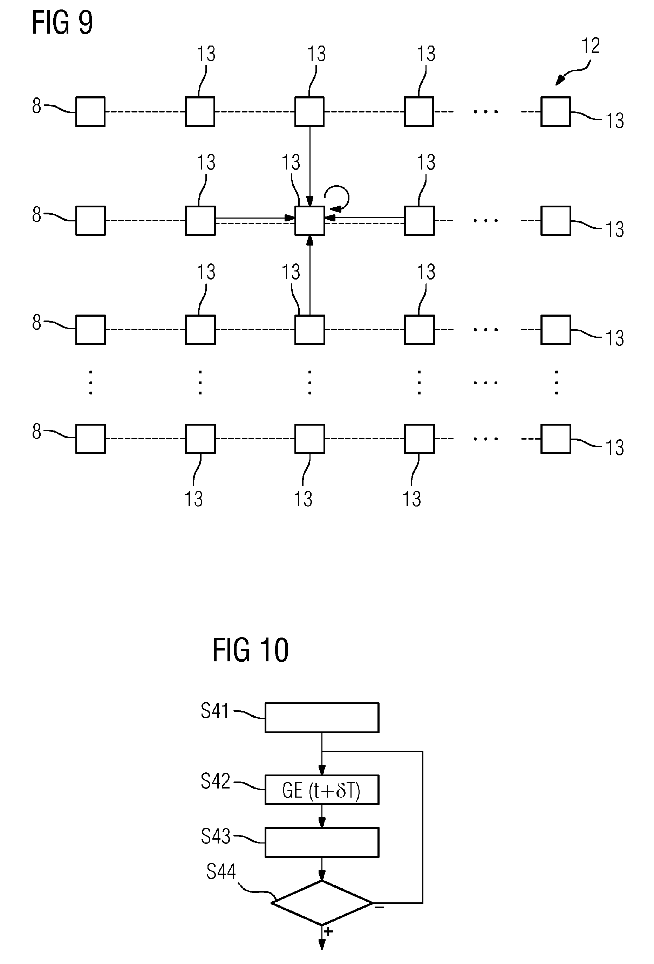

In vielen Fällen führen gemäß FIG 8 alle aktiven floating point-Prozessoren 8 dieselbe Rechenaufgabe aus. Dies ist in FIG 8 daraus ersichtlich, dass die ausgeführte Rechenaufgabe - im Gegensatz zu den FIG 4 und 7 - nicht mit einem Index versehen ist. Die Ausführung derselben Rechenaufgabe kann beispielsweise sinnvoll sein, wenn die aktiven floating point-Prozessoren 8 die Rechenaufgabe gemäß FIG 9 für ein mindestens zweidimensionales Feld 12 von Zellen 13 ausführen. In diesem Fall ordnet die zweite Recheneinrichtung 7 vorzugsweise jedem aktiven floating point-Prozessor 8 eine Anzahl von Zellen 13 zuordnet, für welche der jeweilige aktive floating point-Prozessor 8 die Rechenaufgabe ausführt. Die dem jeweiligen aktiven floating point-Prozessor 8 zugeordneten Zellen 13 sind in FIG 9 durch eine jeweilige gestrichelte Linie mit dem jeweiligen aktiven floating point-Prozessor 8 verbunden. Diese Vorgehensweise kann beispielsweise dann sinnvoll sein, wenn im zweidimensionalen oder dreidimensionalen Fall orts- und/oder zeitabhängige Differenzialgleichungssysteme numerisch gelöst werden sollen. Beispiele derartiger Differenzialgleichungssysteme sind eine Wärmeleitungsgleichung mit oder ohne Kopplung mit einer Phasenumwandlungsgleichung. Die Phasenumwandlung kann - je nach modellierter Anlage oder Einrichtung - eine Phasenumwandlung flüssig/fest (d.h. einen Erstarrungsvorgang) oder eine Phasenumwandlung fest/fest (beispielsweise die Phasenumwandlung von Austenit in Ferrit und/oder Zementit) sein. Auch Strömungsgleichungen können mittels derartiger Differenzialgleichungensysteme gelöst werden, beispielsweise im Rahmen einer sogenannten CFD (= comptational fluid dynamics). Ein Beispiel einer bis zu dreidimensionalen Wärmeleitungsgleichung mit Kopplung mit einer Phasenumwandlungsgleichung ist die mit einer Phasenumwandlung verbundene Abkühlung von Stahl in einer Kühlstrecke, unter Umständen teilweise oder vollständig bereits in einer der Kühlstrecke vorgeordneten Fertigstraße. Ein Beispiel einer bis zu dreidimensionalen Wärmeleitungsgleichung ohne Kopplung mit einer Phasenumwandlungsgleichung ist die Temperaturverteilung in einer rotierenden Gießwalze einer Stranggießanlage oder einer rotierenden Arbeitswalze eines Walzgerüsts, wobei die jeweilige Walze durch den Kontakt mit dem heißen Metall erhitzt und durch ein - vorzugsweise flüssiges - Kühlmedium gekühlt wird.

In einer besonders bevorzugten Ausgestaltung der vorliegenden Erfindung ermitteln die aktiven floating point-Prozessoren 8 das Gesamtergebnis GE dadurch, dass sie für die jeweilige Zelle 13 nach und nach in einer Anzahl von Schritten jeweils aufbauend auf dem Ergebnis des vorherigen Schrittes das Ergebnis des jeweiligen Schrittes ermitteln. In diesem Fall entspricht das Gesamtergebnis GE dem Ergebnis des letzten Schrittes. Die Schritte können entsprechend der Darstellung in FIG 3 relativ klein sein. Falls die Schritte mit einer Zeitspanne korrespondieren, kann die Zeitspanne insbesondere im Bereich von 100 ms und unter Umständen sogar darunter liegen.

Es sind auch kombinierte Vorgehensweisen möglich. Beispielsweise können die Schritte zu Gruppen von jeweils einer vorbestimmten Anzahl von Schritten zusammengefasst sein. Innerhalb der jeweiligen Gruppe kann in einem derartigen Fall durch Iteration nach und nach der jeweils neue Zustand eines Systems ermittelt werden, während die Fortentwicklung von Gruppe zu Gruppe die zeitliche Entwicklung des Systems beschreibt. Der Zustand nach Abzuarbeiten des letzten Schrittes einer jeweiligen Gruppe entspricht in einem derartigen Fall einer Weiterentwicklung des Systems um einen Zeitschritt.

Im Rahmen der Ermittlung des Ergebnisses des jeweiligen Schrittes berücksichtigen die aktiven floating point-Prozessoren 8 vorzugsweise jeweils nur das Ergebnis des unmittelbar vorhergehenden Schrittes der jeweiligen Zelle 13 und der an die jeweilige Zelle 13 angrenzenden Zellen 13. Dies ist in FIG 9 für eine der Zellen 10 durch die entsprechenden mit durchgezogenen Linien gezeichneten Pfeile veranschaulicht und wird nachfolgend in Verbindung mit FIG 10 nochmals erläutert.

FIG 10 zeigt eine mögliche Ausgestaltung der Schrittes S12 und S13. Gemäß FIG 10 werden in einem Schritt S41 Anfangsdaten in die Zellen 13 eingeschrieben. In einem Schritt S42 ermitteln die aktiven floating point-Prozessoren 8 gemäß einer dem jeweiligen Schritt zugeordneten Teilrechenaufgabe ein jeweiliges Ergebnis des jeweiligen Schrittes. Sie verwenden zur Ermittlung des jeweiligen Ergebnisses die zu diesem Zeitpunkt in die Zellen 13 eingeschriebenen Daten.

Für die Ermittlung des jeweiligen Ergebnisses für eine bestimmte Zelle 13 werden im Rahmen des Schrittes S42 vorzugsweise nur die Daten berücksichtigt, die zu diesem Zeitpunkt in die jeweilige Zelle 13 und die an die jeweilige Zelle 13 unmittelbar angrenzenden Zellen 13 eingeschrieben sind. In einem Schritt S43 modifizieren die aktiven floating point-Prozessoren 8 die in die Zellen 13 eingeschriebenen Daten. Der Schritt S43 wird erst ausgeführt, nachdem die jeweiligen Ergebnisse des jeweiligen Schrittes für alle Zellen 13 ermittelt worden sind.

In einem Schritt S44 wird entschieden, ob die Teilrechenaufgaben bereits für alle Schritte ausgeführt worden sind. Wenn dies nicht der Fall ist, führen die aktiven floating point-Prozessoren 8 erneut den Schritt S42 aus. Wenn dies hingegen der Fall ist, ist die Vorgehensweise gemäß FIG 10 beendet. Die zu diesem Zeitpunkt in die Zellen 13 eingeschriebenen Daten bilden das Gesamtergebnis GE.

Aus FIG 10 ist weiterhin ersichtlich, dass die Teilrechenaufgabe für alle Schritte einheitlich dieselbe ist. Dies ist bevorzugt, aber nicht zwingend erforderlich.

Es ist möglich, dass die Prüfung des Schrittes S44 von der zweiten Recheneinrichtung 7 eigenständig durchgeführt wird. Alternativ ist es möglich, dass die zweite Recheneinrichtung 7 für jede Ausführung der Schritte S42 und S43 jeweils von der ersten Recheneinrichtung 4 neu gestartet (getriggert) wird.

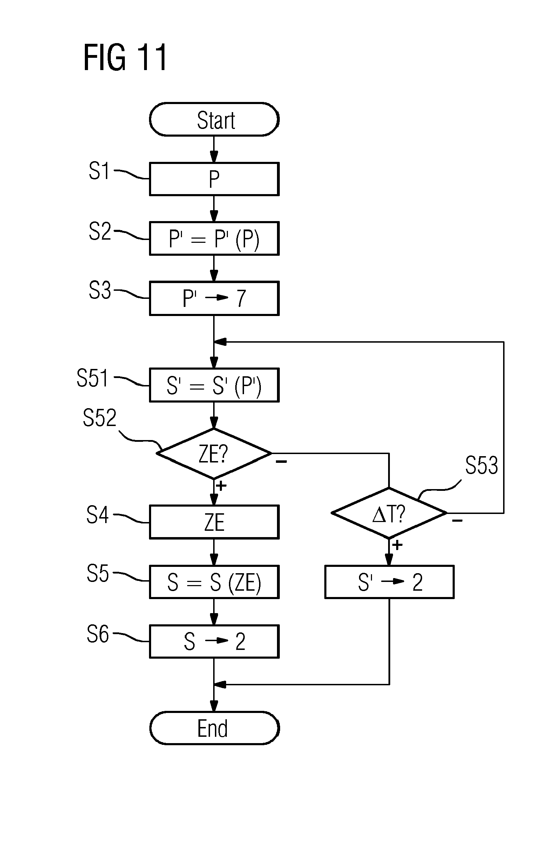

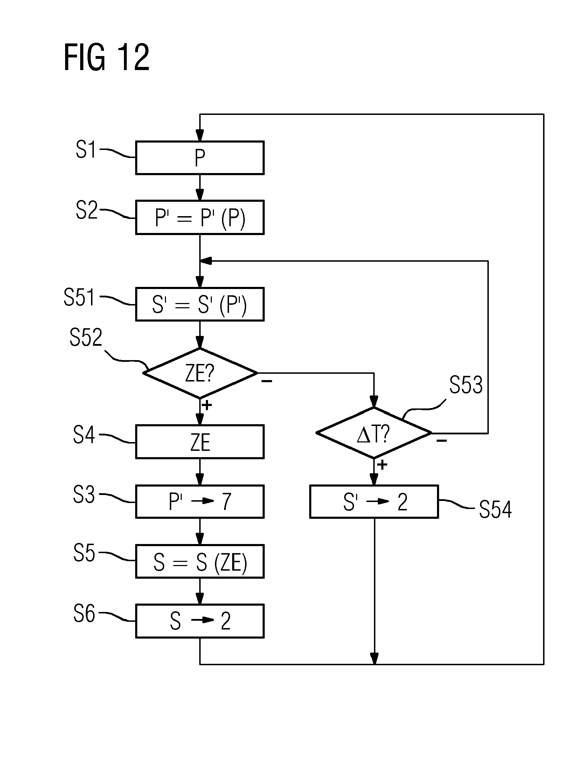

Es kann im Einzelfall geschehen, dass die zweite Recheneinrichtung 7 das Zwischenergebnis ZE nicht rechtzeitig, d.h. nicht innerhalb der vorbestimmten Zeitschranke ΔT, an die erste Recheneinrichtung 4 zurück übermittelt. Um in derartigen Fällen einen ordnungsgemäßen (wenn auch suboptimalen) Betrieb der technischen Anlage 1 gewährleisten zu können, wird die Vorgehensweisen der FIG 2 vorzugsweise entsprechend der Darstellung in FIG 11 modifiziert. In analoger Weise wird die Vorgehensweise der FIG 6 vorzugsweise entsprechend der Darstellung in FIG 12 modifiziert.

Gemäß den FIG 11 und 12 sind - zusätzlich zu den Schritten S1 bis S6 - Schritte S51 bis S54 vorhanden. Im Schritt S51 ermittelt die erste Recheneinrichtung 4 in Abhängigkeit von den ihr vorliegenden vorverarbeiteten Prozessgrößen P' Notsteuergrößen S' für die technische Anlage 1. Im Schritt S52 prüft die erste Recheneinrichtung 4, ob die zweite Recheneinrichtung 7 das Zwischenergebnis ZE bereitstellen kann. Wenn dies der Fall ist, nimmt die erste Recheneinrichtung 4 im Schritt S4 das Zwischenergebnis ZE entgegen und führt in üblicher Weise die Schritte S5 und S6 aus. Wenn die Prüfung des Schrittes S52 negativ verläuft, geht die erste Recheneinrichtung 4 zum Schritt S53 über. Im Schritt S53 prüft die erste Recheneinrichtung 4, ob die vorbestimmte Zeitschranke ΔT abgelaufen ist. Wenn dies nicht der Fall ist, geht die erste Recheneinrichtung 4 zum Schritt S51 zurück. Anderenfalls geht die erste Recheneinrichtung 4 zum Schritt S54 über. Im Schritt S54 gibt die erste Recheneinrichtung 4 die Notsteuergrößen S' an die Basisautomatisierung 2 der technischen Anlage 1 aus.

Es ist möglich, den Schritt S51 dem Schritt S53 nachzuordnen. Die Ausführung des Schrittes S51 - gegebenenfalls etappenweise in der aus den Schritten S51, S52 und S53 bestehenden Schleife - bietet jedoch den Vorteil, dass die erste Recheneinrichtung 4 die Notsteuergrößen S' bereits vor Ablauf der vorbestimmten Zeitschranke ΔT ermittelt. Falls die vorbestimmte Zeitschranke ΔT fruchtlos - d.h. ohne Lieferung des Zwischenergebnisses ZE - verstreicht, stehen durch die ergriffene Vorgehensweise die Notsteuergrößen S' sofort zur Verfügung.

Im Falle der Ausgestaltung gemäß FIG 12, wenn also die Lieferung des Zwischenergebnisses ZE zyklisch erfolgt, kann die erste Recheneinrichtung 4 entsprechend der Darstellung in FIG 12 bei der Ermittlung der Notsteuergrößen S' zusätzlich zu den ihr vorliegenden vorverarbeiteten Prozessgrößen P' ein Zwischenergebnis ZE berücksichtigen, das sie in einem früheren Zyklus von der zweiten Recheneinrichtung 7 erhalten hat.

Die vorliegende Erfindung wurde obenstehend in Verbindung mit Beispielen erläutert, bei welchen umfangreiche Differenzialgleichungssysteme gelöst werden. Die vorliegende Erfindung ist jedoch ebenso einsetzbar, wenn ein größeres lineares Gleichungssystem gelöst werden soll. Insbesondere liefern numerische Verfahren in der Praxis oftmals zwar relativ große, aber dünn besetzte Matrizen. Die Lösung derartige Matrizen kann vorteilhaft ebenfalls durch erfindungsgemäße Nutzung der zweiten Recheneinrichtung 7 erfolgen.

Für den Fall, dass die zweite Recheneinrichtung 7 ihr Gesamtergebnis GE für einen nachfolgenden Rechenzyklus speichern kann, kann der Umfang der Daten, der zwischen der ersten Recheneinrichtung 4 und der zweiten Recheneinrichtung 7 übertragen werden muss, deutlich reduziert werden.

Mittels des erfindungsgemäßen Steuerverfahrens ist es möglich, in Echtzeit oder zumindest online ein numerisches Modell hinreichender Auflösung zu implementieren.

Die erfindungsgemäße Vorgehensweise wird nachstehend anhand eines konkreten Anwendungsbeispiels nochmals kurz erläutert.

Bei langsam drehenden Walzen, die lokal mit einem heißen Gut (beispielsweise einem flüssigen Metall oder einem heißen Band) in Kontakt kommen, kommt es zu einem ausgeprägt asymmetrischen Aufheizen der Walzen. Die genaue Form der Walze lässt sich in diesem Fall nur mittels eines dreidimensional ortsaufgelösten Temperatur-Ausdehnungsmodells ermitteln. Ein derartiges Modell kann zwar mittels einer general purpose-Recheneinrichtung gelöst werden, jedoch nicht in Echtzeit. Daher wird auf der ersten Recheneinrichtung 4 ein Prozess implementiert, der die Prozessgrößen P, welche die Basisautomatisierung 2 mit einem Takt von beispielsweise 50 ms liefert, zwischenspeichert und über gewisse Zeit akkumuliert. Die Prozessgrößen P werden dann in größeren Zeitabschnitten an die zweite Recheneinrichtung 7 übermittelt. Beispielsweise kann jeweils der Mittelwert fünf aufeinander folgender Prozessgrößen P ermittelt werden. Weiterhin werden von der ersten Recheneinrichtung 4 weitere relevante Größen wie beispielsweise die Temperatur des heißen Kontaktmaterials, die relevante Breite, Kühlmittelmengen und -temperaturen, Drehzahl der Walzen und dergleichen verarbeitet. Daraus ermittelt die erste Recheneinrichtung 4 Randbedingungen für das dreidimensionale Temperaturmodell der Walze. Die Randbedingungen entsprechend den vorverarbeiteten Prozessgrößen P'. In einem relativ großen Raster von beispielsweise 3 s werden die Randbedingungen von der ersten Recheneinrichtung 4 an die zweite Recheneinrichtung 7 übermittelt. Die zweite Recheneinrichtung 7 implementiert das dreidimensionale Temperaturmodell. Es berücksichtigt bei der Ermittlung der Temperaturverteilung in der Walze die übermittelten Randbedingungen. Die Temperaturverteilung entspricht dem Gesamtergebnis GE. Anhand des Gesamtergebnisses GE ermittelt die zweite Recheneinrichtung 7 als Zwischenergebnis ZE die Kontur der Walze zumindest im Kontaktbereich mit dem heißen Kontaktmaterial (Schmelze oder Band). Nur diese Daten werden von der zweiten Recheneinrichtung 7 an die erste Recheneinrichtung 4 zurück übermittelt. Die erste Recheneinrichtung 4 kann dadurch die hochgenau modellierte Kontur der Walze bei der Ermittlung von Anstellungen der Walze (beispielsweise der Ansteuerung von Rückbiegeeinrichtungen) berücksichtigen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Steuerverfahren für eine technische Anlage (1),
- wobei eine erste Recheneinrichtung (4) zu einem Anfangszeitpunkt (T1) von einer Basisautomatisierung (2) der technischen Anlage (1) Prozessgrößen (P) entgegennimmt,
- wobei die erste Recheneinrichtung (4) als general purpose-Rechner ausgebildet ist,
- wobei die erste Recheneinrichtung (4) die ihr zugeführten Prozessgrößen (P) vorverarbeitet und die vorverarbeiteten Prozessgrößen (P') einer zweiten Recheneinrichtung (7) zuführt,
- wobei die zweite Recheneinrichtung (7) eine Vielzahl von floating point-Prozessoren (8) aufweist,
- wobei zumindest ein Teil der floating point-Prozessoren (8) aktiv ist,
- wobei die aktiven floating point-Prozessoren (8) durch zumindest temporär parallele Abarbeitung einer jeweiligen Rechenaufgabe, ausgehend von einem Anfangsergebnis (AE), ein Gesamtergebnis (GE) ermitteln,
- wobei die Anzahl an ausgeführten Rechenaufgaben kleiner als die Anzahl an aktiven floating point-Prozessoren (8) ist,
- wobei die floating point-Prozessoren (8) die vorverarbeiteten Prozessgrößen (P') bei der Ermittlung des Gesamtergebnisses (GE) als Startbedingungen, als Randbedingungen und/oder im Rahmen eines Optimierungsproblems berücksichtigen,
- wobei die zweite Recheneinrichtung (7) anhand des Gesamtergebnisses (GE) ein Zwischenergebnis (ZE) ermittelt,
- wobei die zweite Recheneinrichtung (7) das Zwischenergebnis (ZE) an die erste Recheneinrichtung (4) zurück übermittelt und
- wobei die erste Recheneinrichtung (4) unter Berücksichtigung des Zwischenergebnisses (ZE) Steuergrößen (S) für die technische Anlage (1) ermittelt und die Steuergrößen (S) zu einem Endzeitpunkt (T2) an die Basisautomatisierung (2) der technischen Anlage (1) ausgibt,
- wobei die Differenz (δT) zwischen dem Endzeitpunkt (T2) und dem Anfangszeitpunkt (T1) kleiner als eine vorbestimmte Zeitschranke (ΔT) ist.

2. Steuerverfahren nach Anspruch 1,
**dadurch gekennzeichnet, dass** die erste Recheneinrichtung (4) die vorverarbeiteten Prozessgrößen (P') durch auf den entgegengenommenen Prozessgrößen (P) basierende, aufeinander aufbauende Rechenoperationen und/oder von den entgegengenommenen Prozessgrößen (P) abhängige konditionale Rechenoperationen und/oder durch Akkumulation, Filterung und/oder statistische Auswertung der entgegengenommenen Prozessgrößen (P) ermittelt.

3. Steuerverfahren nach Anspruch 1 oder 2,
**dadurch gekennzeichnet, dass** es wiederholt ausgeführt wird, dass die zweite Recheneinrichtung (7) das von ihr ermittelte Gesamtergebnis (GE) speichert und dass die zweite Recheneinrichtung (7) das gespeicherte Gesamtergebnis (GE) im Rahmen des nachfolgenden Aufrufs im Rahmen des Anfangsergebnisses (AE) verwertet.

4. Steuerverfahren nach Anspruch 1, 2 oder 3,
**dadurch gekennzeichnet, dass** alle aktiven floating point-Prozessoren (8) dieselbe Rechenaufgabe ausführen.

5. Steuerverfahren nach Anspruch 4,
**dadurch gekennzeichnet, dass** die aktiven floating point-Prozessoren (8) die Rechenaufgabe für ein mindestens zweidimensionales Feld (12) von Zellen (13) ausführen und dass die zweite Recheneinrichtung (7) jedem aktiven floating point-Prozessor (8) eine Anzahl von Zellen (13) zuordnet, für welche der jeweilige aktive floating point-Prozessor (8) die Rechenaufgabe ausführt.

6. Steuerverfahren nach Anspruch 5,
**dadurch gekennzeichnet, dass** die aktiven floating point-Prozessoren (8) das Gesamtergebnis (GE) dadurch ermitteln, dass sie für die jeweilige Zelle (13) nach und nach in einer Anzahl von Schritten jeweils aufbauend auf dem Ergebnis des vorherigen Schrittes das Ergebnis des jeweiligen Schrittes ermitteln, und dass das Gesamtergebnis (GE) dem Ergebnis des letzten Schrittes entspricht.

7. Steuerverfahren nach Anspruch 6,
**dadurch gekennzeichnet, dass** die aktiven floating point-Prozessoren (8) im Rahmen der Ermittlung des Ergebnisses des jeweiligen Schrittes jeweils nur das Ergebnis des unmittelbar vorhergehenden Schrittes der jeweiligen Zelle (13) und der an die jeweilige Zelle (13) angrenzenden Zellen (13) berücksichtigen.

8. Steuerverfahren nach Anspruch 6 oder 7,
**dadurch gekennzeichnet, dass** die Rechenaufgabe für die Schritte zum Ermitteln des Ergebnisses des jeweiligen Schrittes eine jeweilige Teilrechenaufgabe umfasst und dass die Teilrechenaufgabe für alle Schritte einheitlich dieselbe ist.

9. Steuerverfahren nach einem der obigen Ansprüche,
**dadurch gekennzeichnet, dass** die erste Recheneinrichtung (4) in dem Fall, dass die zweite Recheneinrichtung (7), gerechnet ab dem Anfangszeitpunkt (T1), das Zwischenergebnis (ZE) nicht innerhalb der vorbestimmten Zeitschranke (ΔT) an die erste Recheneinrichtung (4) zurück übermittelt, in Abhängigkeit von den ihr vorliegenden vorverarbeiteten Prozessgrößen (P') Notsteuergrößen (S') für die technische Anlage (1) ermittelt und die Notsteuergrößen (S') an die Basisautomatisierung (2) der technischen Anlage (1) ausgibt.

10. Steuerverfahren nach Anspruch 9,
**dadurch gekennzeichnet, dass** die erste Recheneinrichtung (4) in dem Fall, dass sie von der zweiten Rechnereinrichtung (7) bei einem früheren Aufruf bereits ein Zwischenergebnis (ZE) entgegengenommen hat, dieses Zwischenergebnis (ZE) bei der Ermittlung der Notsteuergrößen (S') berücksichtigt.

11. Steuerverfahren nach Anspruch 9 oder 10,
**dadurch gekennzeichnet, dass** die erste Recheneinrichtung (4) die Notsteuergrößen (S') bereits vor Ablauf der vorbestimmten Zeitschranke (ΔT) ermittelt.

12. Computerprogramm, das von einer Steuereinrichtung (3) für eine technische Anlage (1) unmittelbar abarbeitbaren Maschinencode (10, 11) umfasst, wobei die Abarbeitung des Maschinencodes (10, 11) durch die Steuereinrichtung (3) bewirkt, dass die Steuereinrichtung (3) ein Steuerverfahren nach einem der obigen Ansprüche ausführt.

13. Steuereinrichtung für eine technische Anlage,
- wobei die Steuereinrichtung eine erste Recheneinrichtung (4) und eine zweite Recheneinrichtung (7) umfasst,
- wobei die erste Recheneinrichtung (4) als general purpose-Rechner ausgebildet ist,
- wobei die zweite Recheneinrichtung (7) eine Vielzahl von floating point-Prozessoren (8) aufweist und
- wobei die Steuereinrichtung mit einem Computerprogramm (9) nach Anspruch 12 programmiert ist, so dass sie im Betrieb ein Steuerverfahren nach einem der Ansprüche 1 bis 11 ausführt.

14. Technische Anlage, die eine Steuereinrichtung (3) nach Anspruch 13 aufweist.
